# EUROPEAN PATENT APPLICATION

(11) **EP 2 343 789 A1**
(43) Date of publication of application: **13.07.2011**
(21) Application number: 10196763.6
(22) Date of filing: 23.12.2010
(51) Int. Cl.: H02J 7/00

(54) **Battery pack, charging apparatus and charging system**

(30) Priority: 06.01.2010 JP 2010001077
(71) Applicant: Sony Corporation, Tokyo 108-0075 (JP)
(72) Inventor: Nagashima, Osamu, Tokyo 108-0075 (JP); Miyajima, Yoichi, Tokyo 108-0075 (JP); Shintani, Shoichi, Tokyo 108-0075 (JP); Moriya, Jiro, Tokyo 108-0075 (JP)
(74) Representative: Jackson, Jonathan Andrew

(57) **Abstract**

A battery pack includes a battery cell, a charge calculator that calculates an amount of charge of the battery cell, a charge setting that sets multiple amounts of charge with different upper limits, a charge selecting switch that selects one of the amounts of charge, and a battery controller having a communication function that sends, to the charging apparatus, charge information about the battery cell and charging command information that instructs charging to be continued to an upper limit for the selected amount of charge.

## Description

The present invention relates to a battery pack and to a charging apparatus and a charging system that charge the battery cell in the battery pack.

A battery pack used for, for example, photography with an electronic device, such as an imaging apparatus, is generally charged until the battery pack is charged to 100% (fully charged). However, a full charge may be unnecessary depending on the photography time taken by the user or the application in which the battery pack is used, and thereby about a half of the full charge, for example, may be adequate. If the battery pack is fully charged in this situation, the remaining charge is released by, for example, a dark current, consuming unnecessary power.

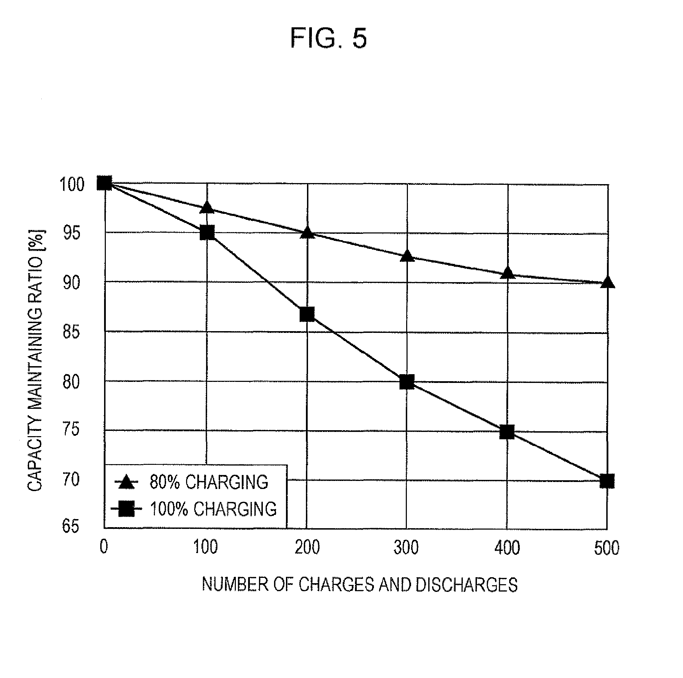

In general, in view of battery capacity deterioration, when a battery pack is charged to less than 100%, 80% for example, its capacity maintaining ratio is higher than when the battery pack is fully charged (see FIG 5). FIG. 5 is a graph showing a relationship between the capacity maintaining ratio and the number of charges and discharges when charging to 80% and charging to 100% are carried out. The capacity maintaining ratio is a ratio between the initial amount of charge (100%) and an amount of charge after charging and discharging of the battery pack have been repeated under predetermined conditions.

As shown in FIG. 5, when charging to the full charge is repeated, the capacity maintaining ratio largely drops as the number of charges and discharges increases; when charging to 80% is repeated, however, the capacity maintaining ratio does not so drop.

In related art concerning the above problem, a switch is provided on a charging apparatus so that an amount of charge can be selected between a full charge (100%) and an amount of charge with an upper limit less than the full charge (see Japanese Patent Application Publication No. 2009-124795, for example.)

In the charging apparatus described in Japanese Patent Application Publication No. 2009-124795, when a desired amount of charge is selected by operating the switch, charging is performed until the selected amount of charge is obtained.

A charging apparatus has a charging circuit that charges a battery pack and a control circuit that controls the charging, so its circuit structure is complex. When a charge amount selecting switch is included, therefore, the circuit structure becomes more complex.

It is desirable to suppress unnecessary power consumption and prolong the life of a battery pack without having to make a charging apparatus structure complex.

A battery pack according to an embodiment of the present invention includes a charge calculator that calculates an amount of charge of a battery cell on the basis of a charge current to and a discharge current from the battery cell, a charge setting means for setting a plurality of amounts of charge with different upper limits, a charge selecting means for selecting one of the plurality of amounts of charge, and a battery controller having a communication function that sends, to a charging apparatus, charge information about the battery cell and charging command information that instructs charging to be continued to an upper limit for the selected amount of charge.

Accordingly, the charging apparatus is controlled on the basis of the charge information and charging command information so that the battery cell is charged to the upper limit for the amount of charge selected by the charge selecting means.

The charge selecting means in the battery pack according to the embodiment of the present invention is preferably a mechanical switch. A full charge and at least two amounts of charge, each of which has an upper limit less than the full charge, have been preferably set as the amount of charge selected by the charge selecting means.

The charging apparatus is controlled so that charging is continued until one of the three settings of the amounts of charge is reached.

A charging apparatus according to another embodiment of the present invention includes a charging controller having a communication function that receives charge information about a battery cell and charging command information from a battery pack having a charge setting means for setting a plurality of amounts of charge with different upper limits, the charging command information instructing charging to be continued to an upper limit for one selected from the plurality of amounts of charge; the charging controller receives the charging command information and controls the charging so that the battery cell is charged to the upper limit for the selected charge amount.

Accordingly, the charging apparatus is controlled on the basis of the charge information and charging command information so that the battery cell is charged to the upper limit for the charge amount selected by a charge selecting means.

A charging system according to yet another embodiment of the present invention has a battery pack and a charging apparatus; the battery pack includes a charge calculator that calculates an amount of charge of a battery cell on the basis of a charge current to and a discharge current from the battery cell, a charge setting means for setting a plurality of amounts of charge with different upper limits, a charge selecting means for selecting one of the plurality of amounts of charge, and a battery controller having a communication function that sends, to a charging apparatus, charge information about the battery cell and charging command information that instructs charging to be continued to an upper limit for the selected amount of charge; the charging apparatus includes a charging controller having a communication function that receives charge information about the battery cell and charging command information from the battery pack, the charging controller receiving the charging command information and controlling the charging so that the battery cell is charged to the upper limit for the selected charge amount.

Accordingly, the charging apparatus is controlled on the basis of the charge information and charging command information sent from the battery pack so that the battery cell is charged to an upper limit for the amount of charge selected by the charge selecting means.

The charge selecting means in the charging system on the basis of the above embodiment is preferably a mechanical switch. A full charge and at least two amounts of charge, each of which has an upper limit less than the full charge, have been preferably set as the amount of charge selected by the charge selecting means.

The charging apparatus is controlled so that charging is continued until one of the three settings of the amounts of charge is reached in the battery pack.

The battery pack and charging system according to the embodiments of the present invention include a charge calculator that calculates an amount of charge of a battery cell on the basis of a charge current to and a discharge current from the battery cell, a charge setting means for setting a plurality of amounts of charge with different upper limits, a charge selecting means for selecting one of the plurality of amounts of charge, and a battery controller having a communication function that sends, to a charging apparatus, charge information about the battery cell and charging command information that instructs charging to be continued to an upper limit for the selected amount of charge.

Accordingly, a charge selecting means for selecting a desired amount of charge can be eliminated from the charging apparatus, so it is possible to suppress unnecessary power consumption and prolong the life of the battery pack without having to make the charging apparatus structure complex.

Preferably, the battery pack can be charged to a plurality of selectable amounts with different upper limits,

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
FIG. 1 is a block diagram showing an example of a charging system according to an embodiment of the present invention.
FIG. 2 is a perspective view of a battery pack in the embodiment of the present invention.
FIG. 3 is a flowchart illustrating the operation of the charging system according to the embodiment of the present invention.
FIG. 4 is a block diagram showing another example of the charging system according to the embodiment of the present invention.
FIG. 5 is a graph showing the relationship between a capacity maintaining ratio and the number of charges and discharges when charging to 80% and charging to 100% are carried out.

A charging system according to an embodiment of the present invention will be described below.

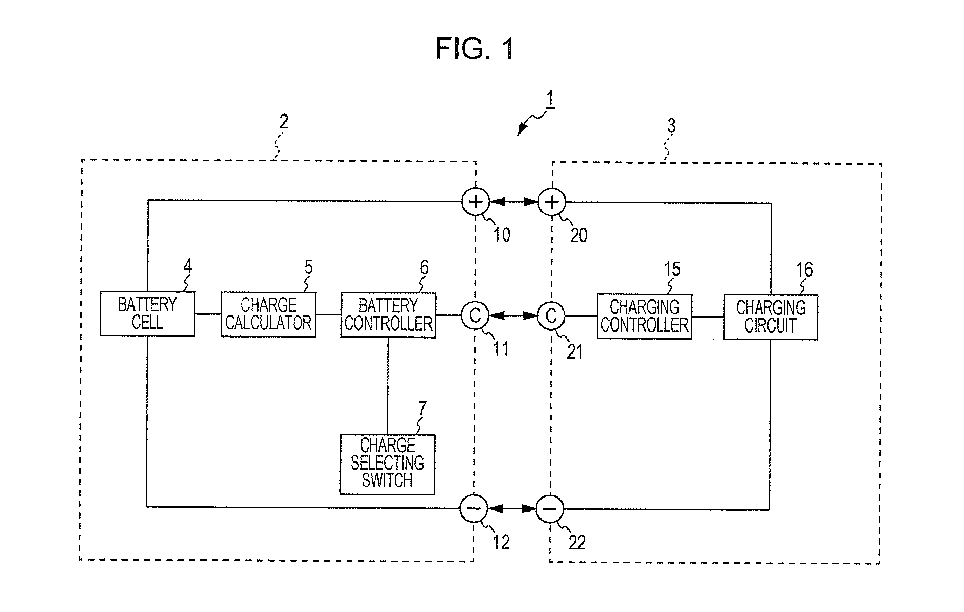

A charging system 1 has a battery pack 2 and a charging apparatus 3 that charges the battery pack 2, as shown in FIG. 1.

The battery pack 2 has a battery cell 4, a charge calculator 5, a battery controller 6, a charge selecting switch 7, a positive terminal 10, a communication terminal 11, and a negative terminal 12. The battery pack 2 is structured so that it is detachably attached to the charging apparatus 3. A plurality of amounts of charge with different upper limits has been set for the battery pack 2.

The charge calculator 5 detects a charge current to and a discharge current from the battery cell 4, calculates the current amount of charge of the battery cell 4 from the detected currents, and sends calculated charge information to the battery controller 6.

The battery controller 6 controls the charge calculator 5 and charge selecting switch 7, receives the charge information from the charge calculator 5 and charge selection information, which will be described below, from the charge selecting switch 7, and sends the charging apparatus 3 the charge information and charging command information instructing charging to be continued to a selected amount of charge.

The charge information and charging command information are stored in a memory (not shown) incorporated in the battery controller 6.

The charge selecting switch 7 selects one of a plurality of amounts of charge with different upper limits. A full charge and another amount of charge with an upper limit less than the full charge, for example, have been set as the amount of charge selected by the charge selecting switch 7.

Although two amounts of charge have been set in the above example, three or more amounts of charge may be set for the battery pack 2.

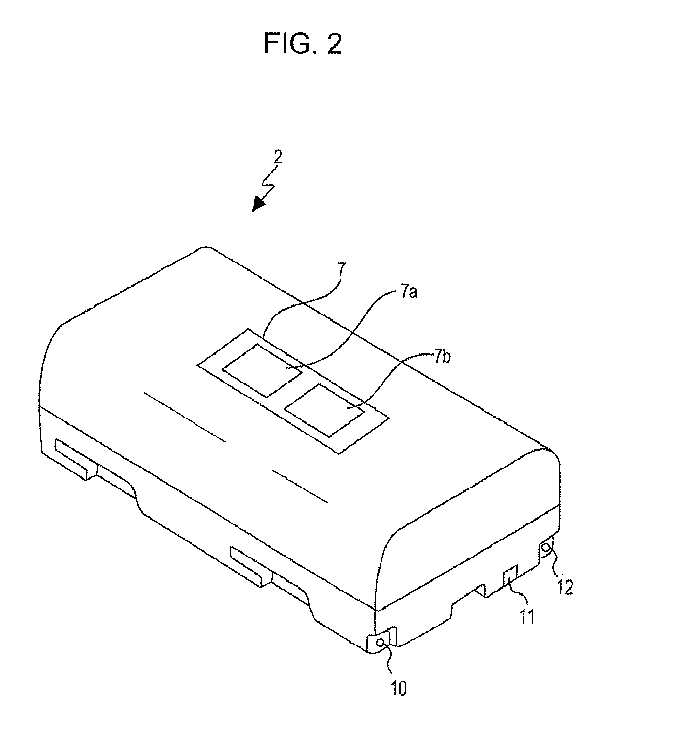

The charge selecting switch 7 is structured with, for example, a switch 7a selecting a first amount of charge and a switch 7b selecting a second amount of charge (see FIG 2). For example, the first amount of charge is a full charge (its upper limit is 100%), and the second amount of charge is an amount of charge the upper limit of which is 80% of the first amount of charge.

When the switch 7a or 7b is operated to select the first or second amount of charge, the charge selection information indicating the selected amount of charge is sent to the battery controller 6.

Although the charge selecting switch 7 includes push-button switches as an example, this is not a limitation; for example, slide switches, contact switches, rotary switches, and other types of switches may be used.

Although the charge selecting switch 7 in the above example is structured with two switches, an arbitrary number of switches may be used. For example, even when two amounts of charge with different upper limits have been set, the charge selecting switch 7 can be structured with a single push-button. In this case, the charge selecting switch 7 can be structured so that one of the amounts of charge is selected when the switch is not operated and the other amount of charge is selected when the switch is operated.

Furthermore, the charge selecting switch 7 may be structured with a first input button that increases a numeric value and a second input button that decreases the numeric value so that the amount of charge to be selected can be input as a percent value by operating the first and second input buttons. In this case, a liquid crystal display unit is preferably provided separately from the charge selecting switch 7 to display the percent value. In the selection of the amount of charge, a precise amount of charge can be set by entering a percent value.

When rotary switches or slide switches are used as described above, if scales are provided on the surface of the switches or battery pack, then an amount of charge can be selected. In this case, the liquid crystal display described above can be eliminated, so the manufacturing cost of the battery pack can be reduced.

The charging apparatus 3 has a charging controller 15, a charging circuit 16, a positive terminal 20, a communication terminal 21, and a negative terminal 22 (see FIG. 1).

The charging controller 15 receives the charge information and charging command information from the battery controller 6, and controls the charging circuit 16 accordingly. The charging controller 15 carries out serial communication with the battery controller 6 through the communication terminal 21 and communication terminal 11.

The charging circuit 16 has a charge detector (not shown) that receives the charge information. The charging circuit 16 continues charging on the basis of the charge information and charging command information until the battery cell 4 is charged to the amount of charge selected by the charge selecting switch 7.

When the battery pack 2 is attached to the charging apparatus 3, the positive terminal 20 is electrically connected to the positive terminal 10 of the battery pack 2, the communication terminal 21 is electrically connected to the communication terminal 11 of the battery pack 2, and the negative terminal 22 is electrically connected to the negative terminal 12 of the battery pack 2.

Next, the operation of the charging system 1 will be described.

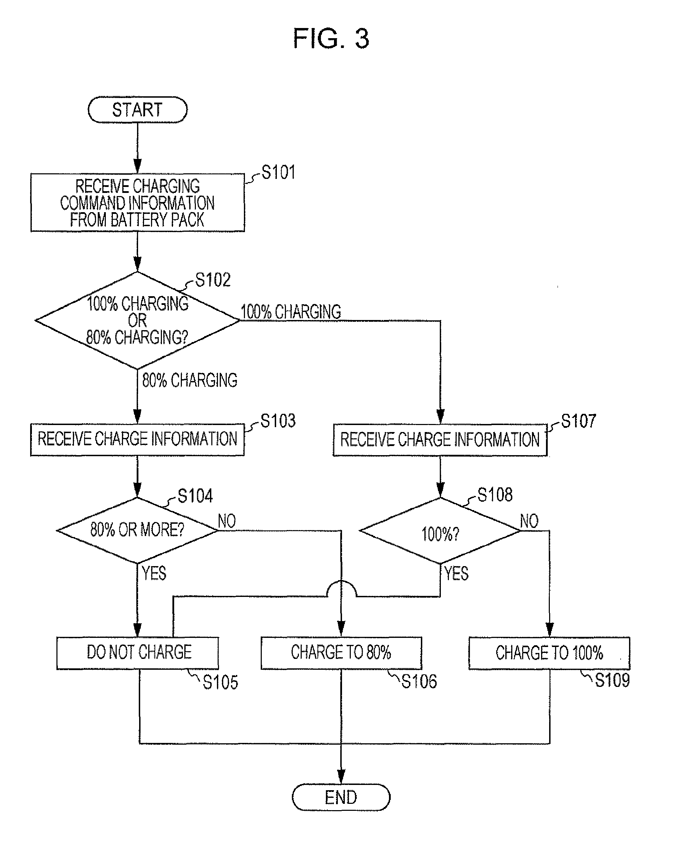

FIG. 3 is a flowchart illustrating the operation of the charging system 1 according to the embodiment of the present invention. In the example in FIG. 3, the full charge (100%) or the amount of charge with an upper limit of 80% is selected.

When the battery pack 2 is attached to the charging apparatus 3 and then the charge selecting switch 7 is operated to select charging command information, the selected charging command information is sent to the charging controller 15 through the battery controller 6.

The charging controller 15 receives the charging command information (step S101) and determines whether 100% charging (full charging) or 80% charging has been selected (step S102). If the charging controller 15 determines that 80% charging has been selected, it receives the current charge information for the battery cell 4 through the battery controller 6 (step S103) and determines whether the current amount of charge in the battery cell 4 is 80% or more (step S104).

If it is determined that the current amount of charge in the battery cell 4 is 80% or more, charging is not carried out (step S105) because the selected 80% charging is satisfied. Specifically, the charging controller 15 controls the charging circuit 16 so that it does not charge the battery cell 4.

If it is determined that the current amount of charge in the battery cell 4 is less than 80%, charging is carried out until the battery cell 4 is charged to 80% (step S106). Specifically, the charging controller 15 controls the charging circuit 16 so that the battery cell 4 is charged until its amount of charge becomes 80%, and the charging circuit 16 starts to charge the battery cell 4.

If 100% charging is selected in step S102, the charging controller 15 receives the current charge information about the battery cell 4 through the battery controller 6 (step S107) and then determines whether the current amount of charge of the battery cell 4 is 100% (step S108). If the current amount of charge of the battery cell 4 is 100%, charging is not carried out (step S106). Specifically, the charging controller 15 controls the charging circuit 16 so that it does not charge the battery cell 4. If the current charge amount of the battery cell 4 is less than 100%, the battery cell 4 is charged until the amount of charge becomes 100% (step S109). Specifically, the charging controller 15 controls the charging circuit 16 so that the battery cell 4 is charged until its amount of charge becomes 100%, and the charging circuit 16 starts to charge the battery cell 4.

According to the embodiment described above, since a desired amount of charge is selected by operating the charge selecting switch 7 provided on the battery pack 2, a charge selecting switch operable to select a desired amount of charge can be eliminated from the charging apparatus 3. Therefore, it is possible to suppress unnecessary power consumption and prolong the life of the battery pack without having to make the structure of the charging apparatus 3 complex.

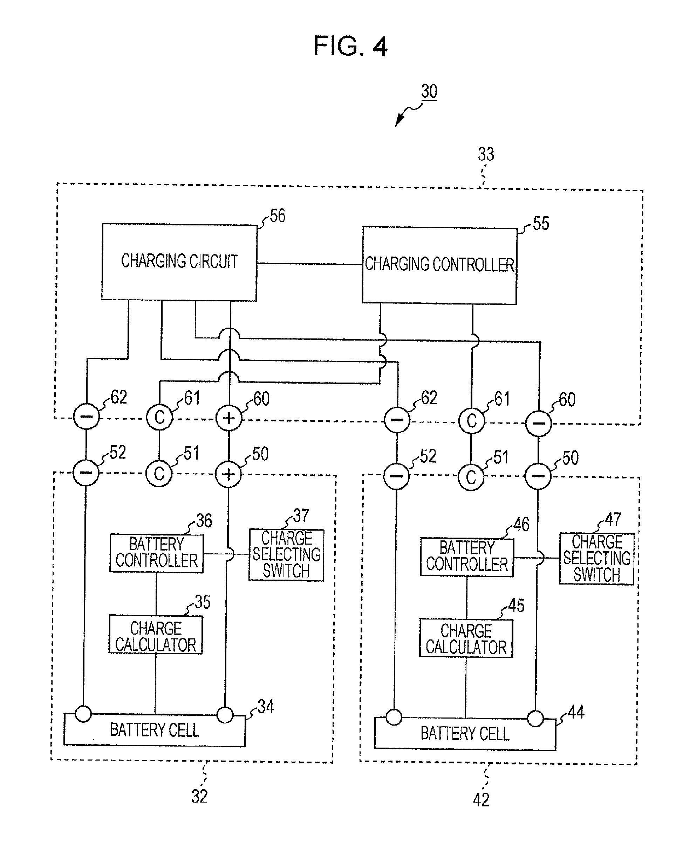

An example in which two battery packs are attached to a charging apparatus will be described below with reference to FIG. 4. In this example, another one battery pack is just added to the structure in FIG. 1, and a charging system operates in the same way as in the example in FIG 1, so its operation will be briefly described.

The charging system 30 has a battery pack 32 and a battery pack 42, and also has a charging apparatus 33 that charges the battery pack 32 and battery pack 42.

The battery pack 32 has a battery cell 34, a charge calculator 35, a battery controller 36, a charge selecting switch 37, a positive terminal 50, a communication terminal 51, and a negative terminal 52. The battery pack 42 has a battery cell 44, a charge calculator 45, a battery controller 46, a charge selecting switch 47, a positive terminal 50, a communication terminal 51, and a negative terminal 52.

The charging apparatus 33 has a charging controller 55, a charging circuit 56, a positive terminals 60, a communication terminals 61, and a negative terminal 62.

In an example described below, the amount of charge with an upper limit of 80% is selected by the charge selecting switch 37, and the amount of charge with an upper limit of 50% is selected by the charge selecting switch 47.

When the battery packs 32 and 42 are attached to the charging apparatus 33 and then the charge selecting switches 37 and 47 are operated, first charging command information and second charging command information are respectively sent to the charging controller 55 through the battery controllers 36 and 46. The first charging command information instructs charging to be continued to the first amount of charge (the amount of charge with an upper limit of 80%) selected by the charge selecting switch 37. The second charging command information instructs charging to be continued to the second amount of charge (the amount of charge with an upper limit of 50%) selected by the charge selecting switch 47. The charging controller 55 receives the first charging command information and the second charging command information.

As for the battery pack 32, the charging controller 55 determines whether the current amount of charge of the battery cell 34 is 80% or more. If the result is determined to be 80% or more, charging is not carried out. If the result is determined to be less than 80%, the battery cell 34 is charged until the amount of charge becomes 80%.

Next, as for the battery pack 42, the charging controller 55 determines whether the current amount of charge of the battery cell 44 is 50% or more. If the result is determined to be 50% or more, charging is not carried out. If the result is determined to be less than 50%, the battery cell 44 is charged until the amount of charge becomes 50%.

Accordingly, even in a case in which a plurality of battery packs are attached to a charging apparatus and charged, the structure described above can suppress unnecessary power consumption without having to make the structure of the charging apparatus 33 complex and can prolong the lives of the battery packs 32 and 42 without having to make the structure of the charging apparatus 33 complex.

Even when a charging apparatus is structured so as to charge a plurality of battery packs, a desired amount of charge is selected for each battery pack by operating a charge selecting switch provided for the battery pack. Accordingly, it is not necessary to provide a selecting switch operable to select a desired amount of charge at each attaching part in the charging apparatus at which a battery pack is attached, and thereby it is possible to prevent a charging apparatus capable of charging a plurality of battery packs at a time from having a complex structure.

The present application contains subject matter related to that disclosed in Japanese Priority Patent Application JP 2010-001077 filed in the Japan Patent Office on January 06, 2010.

The embodiment described above is a just an example of a preferred embodiment of the present invention. Various modifications of the present invention can be made without departing from the scope of the present invention.

## Claims

1. A battery pack comprising:
a battery cell;
a charge calculator that calculates an amount of charge of the battery cell on the basis of a charge current to and a discharge current from the battery cell;
setting means for setting a plurality of amounts of charge with different upper limits;
charge selecting means for selecting one of the plural ity of amounts of charge; and
a battery controlled having a communication function that sends, to a charging apparatus, charge information about the battery cell and charging command information that instructs charging to be continued to an upper limit for the selected amount of charge.

2. The battery pack according to Claim 1, wherein:
the charge selecting means is a mechanical switch; and
at least two amounts of charge, which are a full charge and an amount of charge with an upper limit less than the full charge, have been set as the amount of charge selected by the charge selecting means.

3. A charging apparatus comprising a charging controller having a communication function that receives charge information about a battery cell and charging command information from a battery pack having setting means for setting a plurality of amounts of charge with different upper limits, the charging command information instructing charging to be continued to an upper limit for one selected from the plurality of amounts of charge;
wherein the charging controller receives the charging command information and controls charging so that the battery cell is charged to the upper limit for the selected charge amount.

4. A charging system comprising:
a battery pack; and
a charging apparatus;
wherein the battery pack includes
a battery cell,
a charge calculator that calculates an amount of charge of the battery cell on the basis of a charge current to and a discharge current from the battery cell,
setting means for setting a plurality of amounts of charge with different upper limits,
charge selecting means for selecting one of the plurality of amounts of charge, and
a battery controller having a communication function that sends, to the charging apparatus, charge information about the battery cell and charging command information that instructs charging to be continued to an upper limit for the selected amount of charge, and
wherein the charging apparatus includes a charging controller having a communication function that receives charge information about the battery cell and charging command information from the battery pack, the charging controller receiving the charging command information and controlling the charging so that the battery cell is charged to the upper limit for the selected charge amount.

5. The battery pack according to Claim 4, wherein:
the charge selecting means is a mechanical switch; and
at least two amounts of charge, which are a full charge and an amount of charge with an upper limit less than the full charge, have been set as the amount of charge selected by the charge selecting means.

6. A battery pack comprising:
a battery cell;
a charge calculator that calculates an amount of charge of the battery cell on the basis of a charge current to and a discharge current from the battery cell;
a charge setting sets a plurality of amounts of charge with different upper limits;
a charge selecting switch operable to select one of the plurality of amounts of charge; and
a battery controller having a communication function that sends, to a charging apparatus, charge information about the battery cell and charging command information that instructs charging to be continued to an upper limit for the selected amount of charge.
